(19) **Europäisches Patentamt**

**European Patent Office**

**Office européen des brevets**

(11) **EP 1 342 414 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***A21B 3/04*** *(2006.01)*

(21) Anmeldenummer: **02005109.0**

(22) Anmeldetag: **07.03.2002**

(54) **Verfahren zum Erfassen der Feuchte in einem Gerät zur Behandlung und Zubereitung von Nahrungsmitteln sowie Gerät zur Behandlung und Zubereitung von Nahrungsmitteln**

Method for detecting the humidity in a device for treating and preparing food stuffs, and device for treating and preparing food stuffs

Procédé de détection de l' humidité dans un dispositif de traitement et préparation de produits alimentaires, et dispositif de traitement et préparation de produits alimentaires

(84) Benannte Vertragsstaaten:
**BE DE DK IT NL**

(43) Veröffentlichungstag der Anmeldung:
**10.09.2003 Patentblatt 2003/37**

(73) Patentinhaber: **ELOMA GmbH BEDARFSARTIKEL ZUR GEMEINSCHAFTSVERPFLEGUNG D-82216 Maisach (DE)**

(72) Erfinder:
• **Grühbaum, Klaus 82290 Landsberied (DE)**
• **Hillmann, Johannes 89233 Neu-Ulm (DE)**

(74) Vertreter: **Strobel, Wolfgang et al Kroher . Strobel Rechts- und Patentanwälte Bavariaring 20 80336 München (DE)**

(56) Entgegenhaltungen:
WO-A-01/53797 DE-A- 2 259 459
DE-A- 4 206 845

**Beschreibung**

Die vorliegende Erfindung betrifft ein Verfahren zum Erfassen der Feuchte in einem Gerät zur Behandlung und Zubereitung von Nahrungsmitteln, nach dem Oberbegriff des Anspruchs 1 sowie ein Gerät zur Behandlung und Zubereitung von Nahrungsmitteln nach dem Oberbegriff des Anspruchs 8.

Seit geraumer Zeit wird an moderne Geräte zur Behandlung und Zubereitung von Nahrungsmitteln die Forderung gestellt, diese Behandlungs- und Zubereitungsverfahren so gut wie möglich den Nahrungsmitteln anzupassen, d. h. das Garraumklima so gut wie möglich zu steuern bzw. zu regeln. Für verschiedene Behandlungs- und Zubereitungsschritte oder - prozesse, wie beispielsweise "Dämpfen", wird eine erhöhte Feuchte im Gasgemisch im Garraum benötigt. Neben der relativ einfachen und bewährten Temperaturerfassung der Garraumatmosphäre bereitet jedoch die Erfassung der Feuchte im Gasgemisch, das sich im Garraum befindet, größere Schwierigkeiten.

Es wurden bereits komplizierte Feuchtesensoren vorgeschlagen, wie beispielsweise aus der GB 2 207 514 A bekannt. Derartige Feuchtesensoren sind jedoch nicht besonders zuverlässig, aufwendig in ihrer Konstruktion und damit teuer sowie auch Verunreinigungen stark ausgesetzt.

Unter Abkehrung von der direkten Feuchtemessung hat sich in der Fachwelt der Weg der indirekten Feuchteerfassung etabliert, wobei verschiedene Erfassungsverfahren vorgeschlagen wurden.

So ist aus der DE 42 06 845 C2 ein indirektes Verfahren zum Erfassen der Feuchte bekannt, bei dem in dem Gasgemisch durch einen Rotor eine Druckdifferenz in einer Strömung aufgebaut, diese Druckdifferenz gemessen, daraus die Dichte des Gasgemisches abgeleitet und die Dichte zum Bestimmen des Anteils an Wasserdampf verwendet wird.

Nachteilig bei diesem Verfahren ist jedoch die nur sehr geringe Druckdifferenz von 1 bis 2 mbar, so daß einerseits höchst aufwendige Meßaufwendungen zur Ermittlung dieses geringen Druckunterschiedes erforderlich sind und andererseits bereits kleinste Schwankungen zu einem nicht aussagekräftigen Ergebnis führen.

Der Vorschlag gemäß DE 100 02 309 C1 geht in eine andere Richtung, nämlich dahin, daß die sich beim Antrieb der Gasförder- und -umwälzeinrichtung einstellende Drehzahldifferenz zur Synchrondrehzahl des Asynchron-Motors, also der Schlupf, als Maß für den gesuchten Anteil der Gaskomponente bei jeweils festgelegten Druck- und Temperaturwerten des Gasgemisches verwendet wird.

Auch hier kommt es auf druckabhängige Werte an, so daß eine Druckerfassung notwendig erscheint. Zudem ergibt sich der Schlupf aus der spezifischen Normdrehzahl des Asynchron-Motors und der tatsächlichen Drehzahl, wobei sonstige Einflüsse auf die tatsächliche Drehzahl, wie z. B. Eigenheiten der Spannungsversorgung, Verschleiß der Komponenten des Motors und insgesamt des Gargeräts etc. unberücksichtigt bleiben. Dies beeinträchtigt die Exaktheit der Erfassung einerseits und benötigt andererseits einen relativ hohen gerätetechnischen Aufwand.

Der vorliegenden Erfindung liegt deshalb die Aufgabe zugrunde, ein Verfahren zum Erfassen der Feuchte in einem Gerät zur Behandlung und Zubereitung von Nahrungsmitteln zu schaffen, bei dem auf einfache Weise und unter Vermeidung einer Druckerfassung die Feuchte im Gasgemisch des Geräts ermittelt werden kann.

Weiterhin hat die vorliegende Erfindung die Aufgabe, ein entsprechendes Gerät zur Behandlung und Zubereitung von Nahrungsmitteln anzugeben.

Diese Aufgaben werden durch die Merkmale des Anspruchs 1 bzw. Anspruchs 8 gelöst.

Gemäß der vorliegenden Erfindung werden die aktuellen gemessenen Werte von Temperatur und Drehzahl mit wenigstens einer Kennlinie, die in einem Rechner hinterlegt ist, verglichen und aus der Abweichung ΔN der gemessenen Drehzahl von der Drehzahl der hinterlegten Kennlinie die aktuelle Feuchte im Gasgemisch bestimmt.

Vorteilhafterweise wird die Kennlinie unter definierten Bedingungen des Geräts erstellt.

Dies bedeutet, daß aufgrund der Kenntnis der Bedingungen beim Erstellen der Kennlinie ein entsprechend exakter Vergleichswert mit der aktuellen Drehzahl des Asynchron-Motors bestimmt werden kann und die festgestellte Drehzahldifferenz läßt dann die aktuelle Feuchte im Gasgemisch sehr exakt bestimmen.

Bevorzugte definierte Bedingungen sind beispielsweise das trockene Gasgemisch, in dem praktisch keine Feuchte vorhanden ist. Bezogen auf die Feuchte ist diese Kennlinie dann eine Art Basiskennlinie, da bei feuchterem Gasgemisch im Garraum sich keine geringere Drehzahl einstellt. Bei ansteigender Feuchte nimmt die Drehzahl des Asynchron-Motors zu. Dabei ergibt sich auch der besondere Vorteil, daß die Erstellung der Kennlinie geräteabhängig bzw. gerätekomponentenabhängig ist. Weitere Einflüsse auf die Drehzahl sind zudem die Drehrichtung der Gasförder- und -umwälzeinrichtung, in der Regel ein Radiallüfter, sowie auch die Größe des Garraums. Herstellungstoleranzen, die unvermeidbar sind, werden dadurch ausgeblendet, weil gemäß dem erfindungsgemäßen Verfahren für jedes Gerät eine spezifische Kennlinie erstellt wird.

Erfindungsgemäß erfolgt dieses Erstellen der Kennlinie vorteilhafterweise dadurch, daß in dem Rechner der Gerätesteuerung ausgehend von einem kalten Gerät bei Zimmertemperatur von ca. 20 °C bis zur maximal möglichen Prozeßtemperatur die dazugehörigen erfaßten Drehzahlen des Motors hinterlegt werden.

Mit weiterem Vorteil wird am Ort der Durchführung des Verfahrens eine Kalibrierung durch Erstellen der Kennlinie an diesem Ort durchgeführt, wodurch Druckunterschiede zwischen dem Ort der Herstellung und dem Ort des Verwendens des Geräts automatisch ausgeblendet werden können.

Darüber hinaus ergibt sich weiterhin der große Vorteil, daß jederzeit während der Laufzeit des Geräts eine Neu- bzw. Nachkalibrierung erfolgen kann und damit auch die durch die Alterung des Geräts bedingten Änderungen, beispielsweise Verschleiß des Asynchron-Motors, Verschmutzung der Dichtungen, etc. berücksichtigt werden könnten.

Mit besonderem Vorteil wird die erfaßte Feuchte als Regelgröße einer Feuchteregelung des Gasgemisches bzw. des Raumklimas bei Geräten zur Behandlung und Zubereitung von Nahrungsmitteln verwendet. Dies führt dazu, daß auf äußerst einfache Weise eine gegenüber dem bisherigen Stand der Technik sehr viel effizientere und einfacher aufgebaute Feuchteregelung des Gasgemisches im Gerät ermöglicht wird.

Die vorliegende Erfindung hat auch ein Gerät zur Behandlung und Zubereitung von Nahrungsmitteln zum Gegenstand, mit einem Garraum, in dem sich ein Gasgemisch befindet, einer Gasförder- und -umwälzeinrichtung, die zur Umwälzung sowie zur Ein- und Abfuhr von Gasen und Gasgemischen dient, einem Asynchron-Motor, der die Gasförder- und - umwälzeinrichtung antreibt, einem Drehzahlmesser zum Messen der Drehzahl des Asynchron-Motors, einem Temperaturfühler zum Messen der Temperatur im Garraum, und einer Rechen- und Steuereinheit, die dazu eingerichtet ist, die gemessenen Drehzahlwerte und temperaturwerte über jeweils eine Leitung entgegenzunehmen und zu verarbeiten. Gemäß der vorliegenden Erfindung enthält die Rechen- und Steuereinheit eine Vergleichseinrichtung, die in der Lage ist, die gemessenen Werte von Temperatur und Drehzahl mit einer hinterlegten Kennlinie zu vergleichen und die aktuelle Feuchte im Gasgemisch zu errechnen.

Zur Verwirklichung einer effizienten Feuchteregelung weist das Gerät eine steuerbare Einrichtung zur Zuführung von Feuchte und eine steuerbare Einrichtung zum Abführen von Feuchte auf, die beide über Leitungen mit der Rechen- und Steuereinheit verbunden sind. Die Rechen- und Steuereinheit umfaßt eine Regeleinheit, die dazu eingerichtet ist, den ermittelten aktuellen Feuchtewert mit einem Feuchtesollwert für den aktuellen Behandlungs- und/oder Zubereitungsschritt zu vergleichen und in Abhängigkeit von dem ermittelten Ergebnis dieses Vergleichs entweder die Einrichtung zum Zuführen von Feuchte bei zu geringer Feuchte oder die Einrichtung zum Abführen von Feuchte bei zu hoher Feuchte oder keine dieser Einrichtungen zu betätigen, wenn die gewünschte Feuchte (Sollwert) der gemessenen Feuchte (Istwert) entspricht.

Weitere Einzelheiten, Merkmale und Vorteile der vorliegenden Erfindung ergeben sich aus der nachfolgenden Beschreibung unter Bezugnahme auf die Zeichnungen. Darin zeigt:

Fig. 1     eine schematische Aufbauansicht von der Seite eines erfindungsgemäßen Geräts zur Behandlung und Zubereitung von Nahrungsmitteln in einer ersten Ausführungsform;

Fig. 2     eine zur Ausführungsform von Fig. 1 alternative Ausführungsform des erfindungsgemäßen Geräts;

Fig. 3     die graphische Darstellung einer Kennlinie gemäß der vorliegenden Erfindung, und

Fig. 4     die Darstellung verschiedener Kennlinien, abhäng von der Feuchte im Gasgemisch.

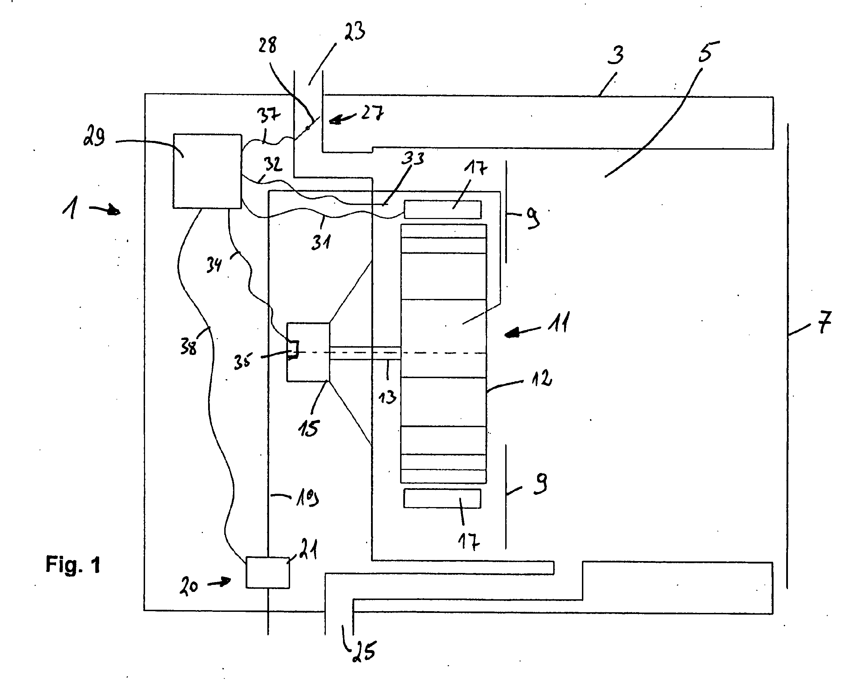

In Fig. 1 ist eine erste Ausführungsform des erfindungsgemäßen Geräts zur Behandlung und Zubereitung von Nahrungsmitteln dargestellt. Das erfindungsgemäße Gerät 1 weist ein Gehäuse 3 auf, in dessen vorderem Bereich ein Garraum 5 ausgebildet ist, der zur Aufnahme von zu behandelnden und/oder zu zubereitenden Nahrungsmitteln dient. Der Garraum 5 wird von seiner Beschickungsseite durch eine Gerätetür 7 verschlossen und ist durch diese zugänglich.

An der zur Gerätetür 7 gegenüberliegenden Garraumseite ist ein Luftleitblech 9 vorgesehen, das dazu dient, einen entsprechenden Strömungsverlauf des im Garraum 5 vorhandenen Gasgemisches (z. B. Heißluft und Wasserdampf) zu erzeugen.

Hinter dem Luftleitblech 9 ist in herkömmlicher Weise eine Gasförder- und -umwälzeinrichtung 11 angeordnet, die gemäß Ausführungsform von Fig. 1 als Radiallüfterrad 12 ausgebildet ist. Das Radiallüfterrad 12 sitzt auf einer Welle 13, die die Antriebswelle eines Asynchron-Motors 15 ist.

Um die Garraumatmosphäre aufzuheizen, ist um die Gasförder- und -umwälzeinrichtung 11 eine Heizeinrichtung 17 vorgesehen, die nur schematisch dargestellt ist. Beispielsweise kann diese nach Ausführung von Fig. 1 aus mehreren sich um das Lüfterrad erstreckenden im wesentlichen parallel verlaufenden Heizrohren (nicht dargestellt) ausgebildet sein.

Um zusätzliche Feuchte in den Garraum einzubringen, ist eine Wasserzuführeinrichtung 19 vorgesehen, in der ein steuerbares Zulaufventil 21 vorgesehen ist. Die Wasserzuführeinrichtung 19 mündet in dem dem Garraum 5 zugeordneten vorderen vertikalen Abschnitt des Radiallüfterrads 12 und in dessen Mittenbereich.

Weiterhin weist das erfindungsgemäße Gerät in an sich bekannter Weise einen Zuluftkanal 23 und einen Ablauf- bzw. Abführkanal 25 auf. In dem Zuluftkanal 23 ist eine steuerbare Einrichtung 27 zum Abführen von Feuchte aus dem Garraum 5 in Form einer steuerbaren Klappe 28 vorgesehen. Das steuerbare Zulaufventil 21 dient umgekehrt als steuerbare Einrichtung zur Zuführung von Feuchtigkeit 20 in den Garraum.

Im hinteren Bereich des erfindungsgemäßen Geräts 1 ist eine Rechen-, Steuer- und Regeleinrichtung 29 vorgesehen. Diese steht in Verbindung über eine Leitung 31 mit der Heizeinrichtung bzw. Heizung 17.

Weiterhin steht die Rechen-, Steuer- und Regeleinrichtung 29 über eine Leitung 32 in Verbindung mit einem Temperaturmeßfühler 33, der die Temperatur des sich im Garraum 5 befindlichen und durch das Radiallüfterrad 12 umgewälzten Gasgemisches erfaßt.

Weiterhin ist die Rechen-, Steuer- und Regeleinrichtung 29 mit einem Drehzahlmesser 35 des Asynchron-Motors 15 über eine Leitung 34 verbunden. Aufgrund dieser Ausgestaltung ist die Einrichtung 29 in der Lage, die Drehzahl des Asynchron-Motors 15 und die Temperatur im Garraum 5 des dort vorhandenen Gasgemisches zu erfassen.

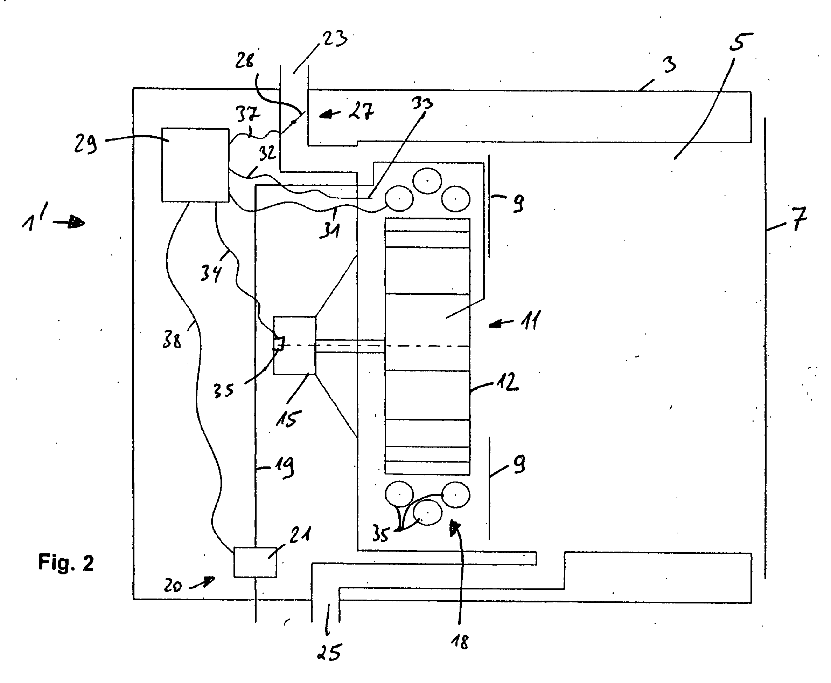

In Fig. 2 ist eine alternative Ausführungsform des erfindungsgemäßen Geräts 1' schematisch dargestellt, wobei die mit der Ausführungsform gemäß Fig. 1 gleichen Elemente mit gleichen Bezugsziffern bezeichnet sind. Aus diesem Grund wird auf eine erneute Beschreibung dieser Elemente verzichtet.

Die Ausführungsform gemäß Fig. 2 unterscheidet sich nur durch die besondere Ausgestaltung der Heizung. Der Unterschied besteht somit darin, daß eine Heizeinrichtung 18 in Form einer gasbefeuerten Wärmetauschereinrichtung vorgesehen ist, die vorzugsweise im Dreieck angeordnete Rohrstränge 35 aufweist. Diese Rohrstränge 35 erstrecken sich im wesentlichen ähnlich um das Radiallüfterrad 12, wie die Heizung 17 von Fig. 1.

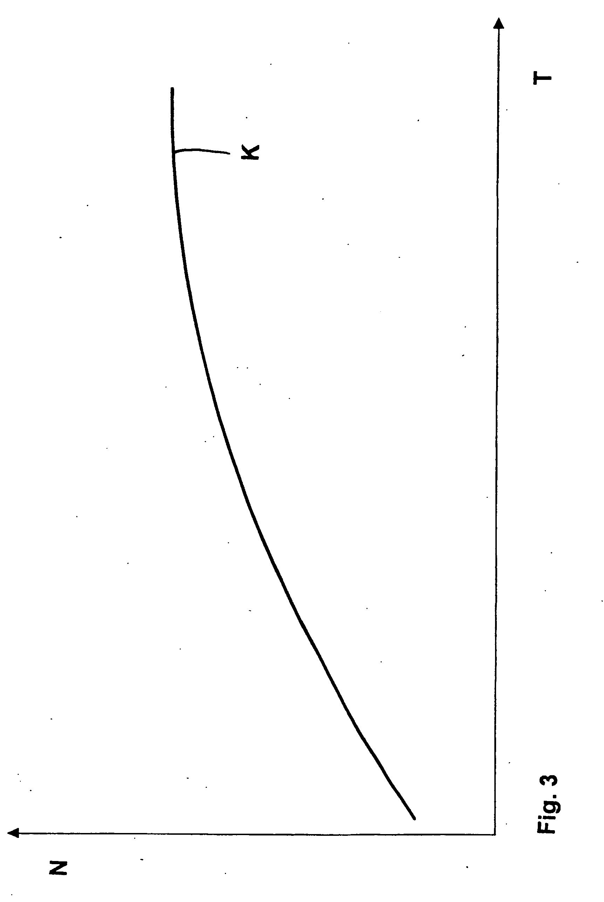

Nachfolgend wird nunmehr Bezug genommen auf die Fig. 3, in der eine graphische Darstellung einer Kennlinie K dargestellt ist. Diese graphische Darstellung stellt auf ihrer Abszissenachse zunehmende Werte der Temperatur T und auf ihrer Ordinatenachse zunehmende Werte der Drehzahl N dar. Die in Fig. 3 dargestellte Kennlinie K erklärt sich folgendermaßen. Sie spiegelt einen bestimmten Feuchtewert, beispielsweise 30%, im Gasgemisch wieder und zeigt den Zusammenhang zwischen Temperatur des Gasgemisches T und Drehzahl des Asynchron-Motors 15. Wie ersichtlich nimmt die Drehzahl bei konstanter Feuchte mit zunehmender Temperatur zu.

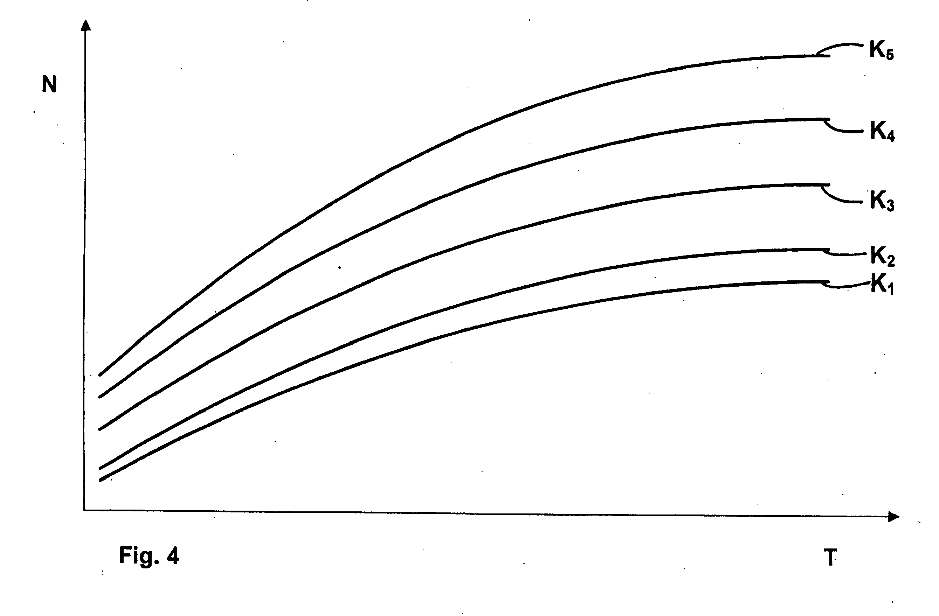

Nunmehr wird Bezug genommen auf Fig. 4. In Fig. 4 sind mehrere Kennlinien $K_1$ bis $K_5$ dargestellt. Es handelt sich bei dieser Darstellung um das gleiche Koordinatensystem, wie in Fig. 3. Die Kennlinie $K_1$ stellt eine unterste Kennlinie dar, die einer trockenen Garraumatmosphäre bzw. einem trockenen Gasgemisch entspricht. Die Kennlinie $K_1$ wird folgendermaßen erfaßt.

Das erfindungsgemäße Gerät 1 bzw. 1' wird ohne Zugabe von Feuchtigkeit und damit bei Umgebungsluft im Garraum 5 erhitzt. Der Bereich, der damit erfaßt wird, beginnt bei Raumtemperatur, also ca. 20°C und endet bei der maximalen Prozeßtemperatur. Es werden kontinuierlich Drehzahlwerte bei kontinuierlich erfaßter Temperatur im Garraum erfaßt und zu der Kennlinie $K_1$ zusammengesetzt, wobei diese Werte als Kennlinie $K_1$ in der Einrichtung 29 hinterlegt werden.

Die Feuchte im Garraum errechnet sich temperaturabhängig nach der Formel:

$$\text{Feuchte} = \Delta N^{\exp(T)}.$$

Der Exponent exp(T) ist somit abhängig von der Temperatur. Darüber hinaus ist dieser Exponent aber auch von weiteren Parametern abhängig, die mit einer entsprechenden Gewichtung in der Einrichtung 29 berücksichtigt werden können. Derartige Parameter sind die Drehrichtung des Lüfters, die Größe des Geräts und gegebenenfalls auch der Verfahrensvorgang des Befeuchten oder Entfeuchten des Garraums.

Die Kennlinien $K_2$ bis $K_5$ zeigen Drehzahlwerte des Asynchron-Motors 15 für unterschiedliche jedoch jeweils konstante Feuchten. So kann beispielsweise die Kennlinie $K_2$ einer Feuchte von 25%, die Kennlinie $K_3$ einer Feuchte von 50%, die Kennlinie $K_4$ einer Feuchte von 75% und die Kennlinie $K_5$ einer Feuchte von 100% entsprechen. Diese Werte bedeuten selbstverständlich keine relativen Feuchtewerte, sondern, temperaturabhängig, maximal Feuchtesättigungsgrade des Gasgemisches.

Nachfolgend wird ein Beispiel erläutert, das zur Veranschaulichung des erfindungsgemäßen Verfahrens dient. Beispielsweise wird bei 150°C gegart, was von dem Temperaturmeßfühler 33 erfaßt wird, und der Drehzahlmesser 35 erfaßt eine Drehzahl von 1440 U/min. Gemäß Kennlinie $K_1$ ist für trockne Luft bei 150°C eine Drehzahl von 1420 Umdrehungen/Minute hinterlegt. Daraus ergibt sich ein $\Delta N$ von 20 U/min. Dieses $\Delta N$ entspricht somit einer bestimmten Feuchte, die in dem Gasgemisch vorhanden ist und kann von dem erfindungsgemäßen Gerät 1 bzw. 1' entsprechend angezeigt werden.

Die vorliegende Erfindung umfaßt auch ein Verfahren, das eine Feuchteregelung im Garraum 5 ermöglicht. Weiterhin umfaßt die vorliegende Erfindung auch Gargeräte, in der eine derartige Feuchteregelung verwirklicht ist.

Der gemäß obiger Darstellung ermittelte Feuchtewert wird zur Feuchteregelung mit einem in einem entsprechenden Programmschritt hinterlegten Feuchtewert verglichen (Soll-Ist-Vergleich) und die Rechen-, Steuer- und Regeleinrichtung 29 wirkt entsprechend über Leitungen 37 bzw. 38 auf die Einrichtung zum Entfeuchten 27 oder auf die Einrichtung zum Befeuchten 20 ein. Ist für den Garprozeßschritt die Feuchte zu hoch, wird die steuerbare Klappe 28 geöffnet und frische unbefeuchtete Luft strömt in den Garraum ein, verdrängt teilweise das im Garraum 5 befindliche Gasgemisch über den Ablaufkanal 25 und verringert somit die Feuchte im Garraum 5.

Ist gemäß Regelvergleich die Feuchte zu gering, so wird über die Leitung 38 die steuerbare Wasserzuführeinrichtung 19 betätigt und Wasser in das Lüfterrad eingespritzt, wodurch umgehend die Feuchte im Garraum 5 erhöht wird.

Die vorliegende Erfindung ist nicht auf die dargestellten Ausführungsformen beschränkt. So kann die Gasförder- und -umwälzeinrichtung 11 anstatt im Gerät hinten auch seitlich montiert sein. Das Luftleitblech kann sich auch senkrecht zur Türe erstrecken. Der Abführkanal kann auch als separater Kanal ausgebildet sein. Weiterhin kann die Einrichtung 29 auch seitlich im Gerät angeordnet sein.

Somit wird mit der vorliegenden Erfindung sowohl ein äußerst effizientes Verfahren zum Erfassen der Feuchte in einem Gerät zur Behandlung und Zubereitung von Nahrungsmitteln geschaffen, als auch eine besonders einfache Lösung zur Verwirklichung eines Geräts zur Behandlung und Zubereitung von Nahrungsmitteln angegeben, mit dem optimale Garprozesse erzielt werden.

**Patentansprüche**

1. Verfahren zum Erfassen der Feuchte in einem Gasgemisch in einem Gerät (1; 1') zur Behandlung und Zubereitung von Nahrungsmitteln, bei dem das Gasgemisch mittels einer Gasförder- und -umwälzeinrichtung (11) umwälzbar ist und die Gasförder- und umwälzeinrichtung (11) mittels eines Asynchronmotors (15) angetrieben wird, wobei zum Erfassen der Feuchte die Temperatur des Gasgemisches und die Drehzahl der Gasförder- und -umwälzeinrichtung erfaßt werden, **dadurch gekennzeichnet, daß** die aktuellen gemessenen Werte der Temperatur und der Drehzahl mit wenigstens einer Kennlinie ($K_1$), die in einem Rechner (29) hinterlegt ist, verglichen werden und aus der Abweichung $\Delta N$ der gemessenen Drehzahl von der Drehzahl der hinterlegten Kennlinie die aktuelle Feuchte im Gasgemisch bestimmt wird.

2. Verfahren nach Anspruch 1, **dadurch gekennzeichnet, daß** die Kennlinie unter definierten Bedingungen des Geräts erstellt wird.

3. Verfahren nach Anspruch 2, **dadurch gekennzeichnet, daß** die Kennlinie bei trockenem Gasgemisch erstellt wird.

4. Verfahren nach Anspruch 2 oder 3, **dadurch gekennzeichnet, daß** in dem Rechner (29) der Steuerung des Geräts bei Temperaturen von ca. 20 °C bis zur maximal möglichen Prozeßtemperatur die dazugehörigen erfaßten Drehzahlen des Motors hinterlegt werden.

5. Verfahren nach einem der Ansprüche 2 bis 4, **dadurch gekennzeichnet, daß** am Ort der Durchführung des Verfahrens eine Kalibrierung durch Erstellen der Kennlinie an diesem Ort durchgeführt wird.

6. Verfahren nach einem der Ansprüche 2 bis 5, **dadurch gekennzeichnet, daß** während der Lebenszeit des Geräts jederzeit eine Neu- bzw. Nachkalibrierung durchgeführt werden kann.

7. Verfahren nach einem der Ansprüche 1 bis 6, **dadurch gekennzeichnet, daß** die erfaßte Feuchte als Regelgröße einer Feuchteregelung des Gasgemisches bei Geräten zur Behandlung und Zubereitung von Nahrungsmitteln verwendet wird.

8. Gerät (1; 1') zur Behandlung und Zubereitung von Nahrungsmitteln, speziell zur Durchführung des Verfahrens nach einem der Ansprüche 1 bis 5, mit einem Garraum (5), in dem sich ein Gasgemisch befindet,
einer Gasförder- und -umwälzeinrichtung (11), die zur Umwälzung sowie zur Ein- und Abfuhr von Gasen und Gasgemisch dient,
einem Asynchronmotor (15), der die Gasförder- und -umwälzeinrichtung (11) antreibt,
einem Drehzahlmesser (35) zum Messen der Drehzahl des Asynchronmotors (15),
einem Temperaturfühler (33) zum Messen der Temperatur im Garraum, und
einer Rechen- und Steuereinheit (29), die dazu eingerichtet ist, die gemessenen Drehzahlwerte über eine Leitung (34) und die gemessenen Temperaturwerte über eine Leitung (32) entgegenzunehmen und zu verarbeiten,
**dadurch gekennzeichnet, daß** die Rechen- und Steuereinheit (29) eine Vergleichseinrichtung enthält, die in der Lage ist, die gemessenen Werte von Temperatur und Drehzahl mit einer hinterlegten Kennlinie ($K_1$) zu vergleichen und die aktuelle Feuchte im Gasgemisch zu errechnen.

9. Gerät nach Anspruch 8, **dadurch gekennzeichnet, daß** es eine steuerbare Einrichtung zum Zuführen von Feuchte (20) und eine steuerbare Einrichtung zum Abführen von Feuchte (27) aufweist, die beide über Leitungen (38, 37) mit der Rechen- und Steuereinheit (29) verbunden sind, und daß die Rechen- und Steuereinheit eine Regeleinheit umfaßt, die dazu eingerichtet ist, den ermittelten aktuellen Feuchtewert mit einem Feuchtesollwert für den aktuellen Behandlungs- und/oder Zubereitungsschritt zu vergleichen und in Abhängigkeit von dem ermittelten Ergebnis dieses Vergleiches, entweder die Einrichtung zum Zuführen von Feuchte (20) oder die Einrichtung zum Abführen von Feuchte (27) oder keine dieser Einrichtungen zu betätigen.

**Claims**

1. A method of detecting the moisture in a gas mixture in an apparatus (1; 1') for treating and preparing food, in which the gas mixture can be circulated by means of a gas supply and circulation means (11) and the gas supply and circulation means (11) is driven by means of an asynchronous motor (15), wherein the temperature of the gas mixture and the speed of the gas supply and circulation means are detected for detecting the moisture,
**characterized in that** the currently measured values of the temperature and the speed are compared to at least one characteristic line ($K_1$), which is memorized in a computer (29), and the current moisture in the gas mixture is determined from the deviation $\Delta N$ of the speed measured from the speed of the memorized characteristic line.

2. A method as claimed in claim 1, **characterized in that** the characteristic line is generated under defined conditions of the apparatus.

3. A method according to claim 2, **characterized in that** the characteristic line is generated when the gas mixture is dry.

4. A method as claimed in claim 2 or claim 3, **characterized in that** the associated detected speeds of the motor are stored in the computer (29) of the control of the apparatus at temperatures of approx. 20°C up to the maximum possible process temperature.

5. A method as claimed in one of the claims 2 to 4, **characterized in that** a calibration is carried out at the location of performance of the method by generating the characteristic line at this location.

6. A method as claimed in one of the claims 2 to 5, **characterized in that** during the life of the apparatus, a new or re-calibration can be carried out any time.

7. A method as claimed in one of the claims 1 to 6, wherein the detected value is used as a control variable of a moisture control of the gas mixture of the apparatus for treating and preparing food.

8. An apparatus (1;1') for treating and preparing food, especially for carrying out the method according to one of claims 1 to 5, comprising
a cooking chamber (5) in which a gas mixture is located,
a gas supply and circulation means (11) which serves for circulation and for the inlet and outlet of gas and gas mixture,
an asynchronous motor (15), which drives the gas supply and circulation means (11),
a speedometer (35) for measuring the speed of the asynchronous motor (15),
a temperature sensor (33) for measuring the temperature in the cooking chamber, and
a computer and control unit (29), which is adapted to receive the measured speed values via line (34) and the measured values of temperature via line (32) and to process,
**characterized in that** the computer and control unit (29) comprises comparing means being adapted to compare the measured values of temperature and speed with a memorized characteristic line ($K_1$) and to calculate the current moisture in the gas mixture.

9. An apparatus as claimed in claim 8 **characterized in that** it comprises a controllable means (20) for supplying moisture and a controllable means (27) for discharging moisture, both means being connected to the computer and control unit (29) via lines (38, 37), and that said computer and control unit comprises control means being adapted to compare the measured current moisture value with a target moisture value for the current step of treating and cooking, and, depending on the calculated result of the comparison, to either operate the means for supplying moisture or the means for discharging moisture or none of these means.

## Revendications

1. Procédé de détection de l'humidité dans un mélange gazeux dans un appareil (1 ; 1') destiné au traitement et à la préparation de produits alimentaires, dans lequel le mélange gazeux peut être brassé au moyen d'un dispositif de brassage et de refoulement de gaz (11) et le dispositif de brassage et de refoulement (11) est entraîné au moyen d'un moteur asynchrone (15), la température du mélange gazeux et la vitesse de rotation du dispositif de brassage et de refoulement de gaz étant détectées pour la détection de l'humidité,
**caractérisé en ce que** les valeurs actuelles mesurées de la température et de la vitesse de rotation sont comparées à au moins une courbe caractéristique ($K_1$), mémorisée dans un ordinateur (29), et l'humidité actuelle dans le mélange gazeux est déterminée à partir de l'écart $\Delta N$ entre la vitesse de rotation mesurée et la vitesse de rotation de la courbe caractéristique mémorisée.

2. Procédé suivant la revendication 1, **caractérisé en ce que** la courbe caractéristique est élaborée dans des conditions définies de l'appareil.

3. Procédé suivant la revendication 2, **caractérisé en ce que** la courbe caractéristique est élaborée pour un mélange gazeux à l'état sec.

4. Procédé suivant l'une des revendications 2 et 3, **caractérisé en ce que** les vitesses de rotation correspondantes détectées du moteur sont mémorisées dans l'ordinateur (29) de la commande de l'appareil à des températures d'environ 20°C jusqu'à la température de processus maximale possible.

5. Procédé suivant l'une des revendications 2 à 4, **caractérisé en ce que**, à l'emplacement de la mise en oeuvre du procédé, un étalonnage est réalisé par élaboration de la courbe caractéristique en cet emplacement.

6. Procédé suivant l'une des revendications 2 à 5, **caractérisé en ce qu'**un nouvel étalonnage ou réétalonnage est réalisable à chaque instant pendant la durée de vie de l'appareil.

7. Procédé suivant l'une des revendications 1 à 6, **caractérisé en ce que** l'humidité détectée est utilisée comme grandeur réglée d'une régulation d'humidité du mélange gazeux dans des appareils destinés au traitement et à la préparation de produits alimentaires.

8. Appareil (1 ; 1') destiné au traitement et à la préparation de produits alimentaires, spécialement à la mise en oeuvre du procédé suivant l'une des revendications 1 à 5, comprenant

    - un espace de cuisson (5), dans lequel se situe un mélange gazeux,
    - un dispositif de brassage et de refoulement de gaz (11), qui sert au brassage ainsi qu'à l'admission et à l'évacuation de gaz et mélange gazeux,
    - un moteur asynchrone (15), qui entraîne le dispositif de brassage et de refoulement de gaz (11),
    - un tachymètre (35) pour mesurer la vitesse de rotation du moteur asynchrone (15),
    - un capteur de température (33) pour mesurer la température dans l'espace de cuisson, et
    - une unité de calcul et de commande (29), conçue pour recevoir les valeurs de vitesse de rotation mesurées à travers une ligne (34) et les valeurs de température mesurées à travers une ligne (32) et pour les traiter,

**caractérisé en ce que** l'unité de calcul et de commande (29) comporte un comparateur, capable de comparer les valeurs mesurées de température et de vitesse de rotation à une courbe caractéristique mémorisée ($K_1$) et de calculer l'humidité actuelle dans le mélange gazeux.

9. Appareil suivant la revendication 8, **caractérisé en ce qu'**il comporte un dispositif commandé pour l'arrivée d'humidité (20) et un dispositif commandé pour la dissipation d'humidité (27), ces deux dispositifs étant reliés par des lignes (38, 37) à l'unité de calcul et de commande (29), et que l'unité de calcul et de commande comprend une unité de régulation conçue pour comparer la valeur d'humidité actuelle déterminée avec une valeur de consigne d'humidité pour la phase actuelle de traitement et/ou de préparation et pour actionner, en fonction du résultat déterminé de cette comparaison, soit le dispositif d'arrivée d'humidité (20) soit le dispositif de dissipation d'humidité (27) ou aucun de ces dispositifs.

Fig. 1

**Fig. 2**

Fig. 3

Fig. 4

EP 1 342 414 B1